# EUROPÄISCHE PATENTSCHRIFT

(11) **EP 3 887 777 B1**
(45) Veröffentlichungstag und Bekanntmachung des Hinweises auf die Patenterteilung: **20.09.2023**
(21) Anmeldenummer: 19801554.7
(22) Anmeldetag: 11.11.2019
(51) Int. Cl.: G01F 23/28, G01F 23/284, G01S 7/40, G01S 7/35, G01S 13/88, G01S 13/34

(54) **VERFAHREN ZU FÜLLSTANDSMESSUNG**
METHOD FOR MEASURING A FILLING LEVEL
PROCÉDÉ DE MESURE DU NIVEAU DE REMPLISSAGE

(30) Priorität: 28.11.2018 DE 102018130186
(43) Veröffentlichungstag der Anmeldung: 06.10.2021
(73) Patentinhaber: Endress+Hauser SE+Co. KG, 79689 Maulburg (DE)
(72) Erfinder: MAYER, Winfried, 89290 Buch (DE); SAUTERMEISTER, Manuel, 79650 Schopfheim (DE)
(74) Vertreter: Koslowski, Christine Adelheid
(86) Internationale Anmeldenummer: PCT/EP2019/080797
(87) Internationale Veröffentlichungsnummer: WO 2020/108965

(56) Entgegenhaltungen:
- DE-A1-102015 120 362
- DE-A1-102015 120 736
- DE-B3-102016 108 594
- US-A1- 2010 156 702
- US-A1- 2015 253 177
- US-A1- 2018 164 145
- US-B2- 9 581 484

## Beschreibung

Die Erfindung betrifft ein Verfahren zur Füllstandsmessung eines in einem Behälter befindlichen Füllgutes sowie ein Füllstandsmessgerät zur Ausführung dieses Verfahrens.

In der Prozessautomatisierungstechnik werden allgemein Feldgeräte eingesetzt, die zur Erfassung oder zur Beeinflussung von Prozessvariablen dienen. Hierzu basiert die Funktionsweise der Feldgeräte auf jeweils geeigneten Messprinzipien, um die entsprechenden Prozessvariablen, wie Füllstand, Durchfluss, Druck, Temperatur, pH-Wert, Redoxpotential oder Leitfähigkeit zu erfassen. Verschiedenste solcher Feldgeräte-Typen werden von der Firma Endress + Hauser hergestellt und vertrieben.

Zur Füllstandsmessung von Füllgütern in Behältern haben sich Radar-basierte Messverfahren etabliert, da sie robust und wartungsarm sind. Dabei werden unter dem Begriff "*Behälter*" im Rahmen der Erfindung auch nicht-abgeschlossene Behältnisse, wie beispielsweise Becken, Seen oder fließende Gewässer verstanden. Ein zentraler Vorteil Radar-basierter Messverfahren besteht in der Fähigkeit, den Füllstand quasi kontinuierlich messen zu können. Im Kontext dieser Patentanmeldung bezieht sich der Begriff "*Radar*" auf Mikrowellensignale mit Frequenzen zwischen 0.03 GHz und 300 GHz. Übliche Frequenzbänder, bei denen Füllstandsmessung durchgeführt wird, liegen bei 2 GHz, 6 GHz 26 GHz oder 79 GHz. Je höher das das Frequenzband gewählt ist, desto schmaler ist der Strahlkegel, in dem das Mikrowellensignal abgestrahlt wird.

Im Fall von Radar-basierter Füllstandsmessung bildet das Pulslaufzeit-Prinzip ein etabliertes Messprinzip. Hierbei werden pulsförmige Mikrowellensignale zyklisch in Richtung des Füllguts ausgesandt und die Laufzeit bis zum Empfang des entsprechenden pulsförmigen Empfangssignals gemessen. Auf Basis dieses Messprinzips können Füllstandsmessgeräte mit vergleichsweise geringem schaltungstechnischem Aufwand realisiert werden.

Sofern eine komplexere Schaltungstechnik in Kauf genommen werden kann, bietet sich zur Radar-basierten Füllstandsmessung auch FMCW *(*"*Frequency Modulated Continuous Wave*") als Messprinzip an. Dieses Messprinzip beruht darauf, das Mikrowellensignal zwar kontinuierlich, jedoch mit modulierter Frequenz auszusenden. Dabei liegt die Frequenz des Mikrowellensignals in einem festgelegten Frequenzband im Bereich einer standarisierten Mittenfrequenz. Kennzeichnend für FMCW ist hierbei, dass die SendeFrequenz nicht konstant ist, sondern sich periodisch innerhalb des festgelegten Frequenzbandes ändert. Bei einer Mittenfrequenz von 79 GHz beträgt das Frequenzband beispielsweise 2 GHz, also von 78 GHz bis 80 GHz. Auch bei FMCW wird das Aussenden bzw. Empfangen der Mikrowellensignale in aufeinanderfolgende Messzyklen gegliedert. Die Patentschrift US 9.581.484 B2 offenbart Beispiele von Überwachungsverfahren für FMCW-Radar Füllstandsmessgeräte.

Die zeitliche Änderung der Frequenz ist bei FMCW standardmäßig linear und weist eine Sägezahn- beziehungsweise Dreiecks-Form auf. Eine Sinus-förmige Änderung kann prinzipiell jedoch auch eingesetzt werden. Im Gegensatz zum Pulslaufzeit-Verfahren wird die Entfernung bzw. der Füllstand bei Implementierung des FMCW-Verfahrens auf Basis der instantanen Frequenzdifferenz zwischen dem aktuellen Empfangssignal und dem momentan ausgesendeten Mikrowellensignal bestimmt.

Das Messprinzip von FMCW und dem Pulslaufzeit-Verfahren wird beispielsweise in "*Radar Level Detection, Peter Devine, 2000*" beschrieben. Bei beiden Messprinzipien wird zur Ermittlung des Füllstandes anhand des Empfangssignals eine entsprechende Auswertungskurve aufgezeichnet. Im Falle des Pulsradar-basierten Verfahrens wird die Auswertungskurve aufgrund der hohen Pulsfrequenz durch Unterabtastung des reflektierten Empfangssignals erstellt. Dadurch bildet die Auswertungskurve das eigentliche, reflektierte Empfangssignal zeitgedehnt ab. Bei Implementierung des FMCW-Verfahrens wird die Auswertungskurve durch Mischen des momentan gesendeten Mikrowellensignals mit dem reflektierten Empfangssignal erstellt. Auch hier wird durch das Mischen die Auswertungskurve in ihrer Zeitachse gedehnt. Unabhängig vom Messprinzip spiegelt die Auswertungskurve die Amplitude des reflektierten Empfangssignals in Abhängigkeit der Messdistanz wieder. Sowohl bei FMCW, als auch beim Pulslaufzeit-Verfahren wird die Auswertungskurve je nach Art des Schaltungsaufbaus der Signalverarbeitung komplexwertig erstellt.

Der Füllstand wird aus der Auswertungskurve durch Detektion und örtlicher Zuweisung des entsprechenden lokalen Maximums bestimmt. Im Idealfall existiert neben dem Maximum, dass durch die Füllgut-Oberfläche erzeugt wird, kein weiteres Maximum. Die Behälter, in denen der Füllstand zu bestimmen ist, werden jedoch mit zunehmendem Automatisierungsgrad von Anlagen zunehmend komplexer. Sie können neben dem Füllgut beispielsweise Einbauten wie Füllstutzen, Agitatoren, Heizstäbe oder Reinigungseinrichtungen enthalten. Darüber hinaus gibt es eine Tendenz zu kleineren Fertigungslosen und damit kleineren Behältern. Hierdurch entsteht die Gefahr, dass neben dem Füllstands-Maximum in der Auswertungskurve weitere Maxima an entsprechenden Orten der Auswertungskurve erscheinen, die durch das Füllstandsmessgerät fälschlicherweise als Füllstands-Maximum interpretiert werden könnten.

Wesentlich für eine zuverlässige Füllstandmessung in komplexen und kleinen Behältern ist daher, dass nur das Füllgut, und nicht die Behälterwände oder Behältereinbauten vom Strahlkegel des Mikrowellensignals erfasst werden. Daher werden Füllstandsmessgeräte bevorzugt, die in hohen Frequenzbändern arbeiten, so dass das Mikrowellensignal mit einer hohen Strahlbündelung ausgesendet wird.

Hierdurch kann das Füllstandsmessgerät das Mikrowellensignal je nach Einbausituation so aussenden, das störende Einbauten oder die Behälterwand nicht angestrahlt werden. Wenn sich die Füllgutoberfläche durch Kochen, Rühren, Schwappen o. ä. bewegt, ist der durch die hohe Strahlbündelung bedingte kleine Beleuchtungsfleck auf der Oberfläche des Füllgutes jedoch von Nachteil. Bei wellenartigen Bewegungen oder Schwappen wird ein großer Teil des reflektierten Mikrowellensignals abgelenkt und gelangt hierdurch nicht mehr zurück zur Antenne des Füllstandsmessgerätes. Die Amplitude des Füllstands-Maximums bricht daher in der entsprechenden Auswertungskurve zeitweise so stark ein, dass der Füllstand nicht mehr bestimmt werden kann. Passiert dies zu häufig, versagen auch etwaige Algorithmen zur Signalverfolgung und das Füllstands-Maximum geht mit fortschreitenden Messzyklen verloren. Diese führt in der Regel zu einem Totalausfall der Füllstandmessung.

Der Erfindung liegt daher die Aufgabe zugrunde, ein Füllstandsmessgerät bereitzustellen, mit dem der Füllstand zuverlässiger bestimmbar ist.

Die Erfindung löst diese Aufgabe durch ein Verfahren nach Anspruch 1 zur Radar-basierten Messung eines Füllstandes eines in einem Behälter befindlichen Füllgutes. Das Verfahren umfasst folgende Verfahrensschritte, die in aufeinanderfolgenden Messzyklen wiederholt werden:
- Aussenden eines Mikrowellensignals in Richtung des Füllgutes über eine Antenne,
- Empfang eines Empfangssignals nach Reflektion des Mikrowellensignals im Inneren des Behälters,
- Erstellung einer komplexwertigen Auswertungskurve anhand von zumindest dem Empfangssignal
- Fortschreitendes Abspeichern der jeweils aktuellen Auswertungskurve,
- Bildung einer ersten, komplexwertigen Differenzkurve anhand der Auswertungskurve des aktuellen Messzyklus und einer gespeicherten Auswertungskurve eines vorhergehenden Messzyklus, und
- Bestimmung des Füllstandes anhand eines Maximums des Imaginärteils oder des Realteils der aktuellen, ersten Differenzkurve.

Dadurch, dass der Füllstand erfindungsgemäß im Bedarfsfall nicht aus der Auswertungskurve, sondern aus der Differenzkurve bestimmt wird, kann der Füllstand auch bei bewegten Füllgut-Oberflächen mit hoher Sicherheit ermittelt werden. In Kombination mit klassischer Bestimmung des Füllstands kann hierdurch der Füllstand insgesamt zuverlässiger bestimmt werden.

Andere bevorzugte Methoden werden gemäß den Ansprüchen 2-10 offenbart. Sofern die Messzyklen, in denen der Füllstand jeweils neu bestimmt wird, mit einer definierten Messrate wiederholt werden, ist es bezüglich des erfindungsgemäßen Verfahrens vorteilhaft, wenn ein erster Abstand des aktuellen Messzyklus zu demjenigen vorhergehenden Messzyklus, aus dem die gespeicherte Auswertungskurve zur Bildung der ersten Differenzkurve herangezogen wird, insbesondere antiproportional in Abhängigkeit der Messrate eingestellt ist. Durch diese Kopplung des Abstandes an die Messrate kann die verstrichene Zeit zu demjenigen vorhergehenden Messzyklus, aus dem die gespeicherte Auswertungskurve zur Bildung der ersten Differenzkurve herangezogen wird, auch bei sich ändernden Messraten konstant gehalten werden. Der Begriff "*Abstand*" bezieht sich in diesem Kontext auf die Anzahl an Messzyklen zwischen dem aktuellen Messzyklus und dem demjenigen vorhergehenden Messzyklus, aus dem die gespeicherte Auswertungskurve zur Differenzkurvenbildung herangezogen wird. Anstelle dessen kann die erste Differenzkurve jedoch auch lediglich anhand der aktuellen Auswertungskurve und der Auswertungskurve, die im direkt vorangegangenen Messzyklus erstellt wurde, gebildet werden.

Wenn die Messzyklen mit einer definierten Messrate wiederholt werden, kann es zudem implementiert werden, dass analog zur ersten Differenzkurve eine zweite Differenzkurve erstellt wird. Dabei wird im Falle der zweiten Differenzkurve ein zweiter Abstand des aktuellen Messzyklus zu demjenigen vorhergehenden Messzyklus, aus der die gespeicherte Auswertungskurve zur Bildung der zweiten Differenzkurve herangezogen wird, eingestellt. Hierbei wird der zweite Abstand abweichend vom ersten Abstand des aktuellen Messzyklus zu demjenigen vorhergehenden Messzyklus, aus der die gespeicherte Auswertungskurve zur Bildung der ersten Differenzkurve herangezogen wird, gewählt. Dadurch werden zwei Differenzkurven erstellt, bei denen zwei jeweils unterschiedlich weit zurückliegende, gespeicherte Auswertungskurven herangezogen werden. Wie weit entfernt der erste Abstand vom zweiten Abstand gewählt wird, kann wiederum individuell von der jeweiligen Situation im Behälter abhängig gemacht werden. Dies bietet unter anderem den Vorteil, dass der Füllstand anhand der zweiten Differenzkurve bestimmt werden kann, sofern der Füllstand anhand der ersten Differenzkurve nicht bestimmbar ist, oder umgekehrt. Alternativ kann auch der Füllstand anhand derjenigen Differenzkurve bestimmt werden, deren Maximum eine höhere Amplitude aufweist.

Alternativ oder zusätzlich zur Bestimmung des Füllstandes anhand der Differenzkurve kann der Füllstand anhand der aktuellen Auswertungskurve bestimmt werden. Dies ist insbesondere von Vorteil, wenn der Füllstand anhand der ersten Differenzkurve und/oder anhand der zweiten Differenzkurve nicht bestimmbar ist, also wenn sich die Füllgut-Oberfläche zum Beispiel nicht bewegt.

Analog zum erfindungsgemäßen Verfahren nach einer der zuvor genannten Ausführungsformen wird die Aufgabe, die der Erfindung zugrunde liegt, durch ein entsprechendes Radar-basiertes Füllstandsmessgerät nach Anspruch 11 gelöst. Andere bevorzugte Ausführungsformen werden in den Ansprüchen 12-13 offenbart.

Anhand der nachfolgenden Figuren wird die Erfindung näher erläutert. Es zeigt:
Fig. 1: Eine typische Anordnung eines Radar-basierten Füllstandsmessgerätes, und
Fig. 2: Eine schematische Darstellung des erfindungsgemäßen Verfahrens.

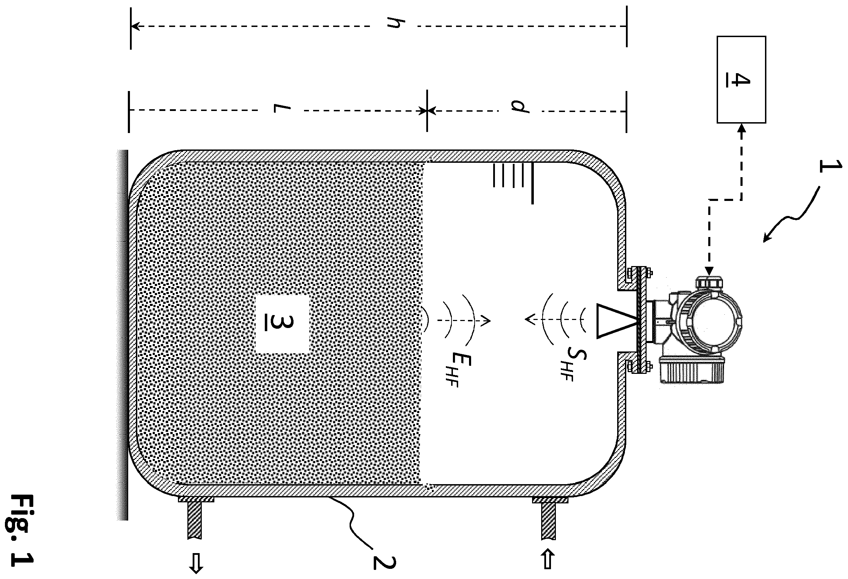

Zum grundsätzlichen Verständnis der Erfindung ist in Fig. 1 eine typische Anordnung eines frei abstrahlenden, Radar-basierten Füllstandsmessgerätes 1 an einem Behälter 2 gezeigt. In dem Behälter 2 befindet sich ein Füllgut 3, dessen Füllstand L durch das Füllstandsmessgerät 1 zu bestimmen ist. Dazu ist das Füllstandsmessgerät 1 oberhalb des maximal zulässigen Füllstands L am Behälter 2 angebracht. Je nach Einsatzgebiet kann die Einbauhöhe h des Füllstandsmessgerätes 1 über dem Behälterboden bis zu mehr als 100 m betragen.

In der Regel ist das Füllstandsmessgerät 1 über ein Bussystem, etwa "Ethernet", "PROFIBUS", "HART" oder "Wireless HART" mit einer übergeordneten Einheit 4, beispielsweise einem Prozessleitsystem oder einer dezentralen Datenbank verbunden. Hierüber können zum einen Informationen über den Betriebszustand des Füllstandsmessgerätes 1 kommuniziert werden. Über das Bussystem können jedoch auch Informationen über den Füllstand L übermittelt werden, um gegebenenfalls am Behälter 2 vorhandene Zu- oder Abflüsse zu steuern.

Da das in Fig. 1 dargestellte Füllstandsmessgerät 1 als frei abstrahlendes Radar ausgelegt ist, umfasst es eine entsprechende Antenne. Dabei kann die Antenne, wie angedeutet, beispielswiese als Hornantenne ausgelegt sein. Insbesondere bei Radar-Frequenzen oberhalb von 100 GHz kann die Antenne auch als Planar-Antenne realisiert sein. Unabhängig von der Bauform ist die Antenne so ausgerichtet, dass entsprechende Mikrowellensignale S_{HF} in Richtung des Füllgutes 3 ausgesendet werden. Dabei werden die Mikrowellensignale S_{HF} je nach Messverfahren (Pulslaufzeit oder FMCW) in einer entsprechenden Signalerzeugungs-Einheit des Füllstandsmessgerätes 1 generiert.

An der Oberfläche des Füllgutes 3 werden die Mikrowellensignale S_{HF} reflektiert und nach einer korrespondierenden Signallaufzeit durch die Antenne bzw. eine nachgeschaltete Empfangseinheit des Füllstandsmessgerätes 1 als Empfangssignale E_{HF} empfangen. Der Füllstand L lässt sich aus den Empfangssignalen E_{HF} bestimmen, da die Signallaufzeit der Mikrowellensignale S_{HF}, E_{HF} von der Entfernung d = h - L des Füllstandsmessgerätes 1 zur Füllgut-Oberfläche abhängt.

Zur Bestimmung des Füllstandes L erstellt eine hierfür ausgelegte Auswertungseinheit des Füllstandsmessgerätes 1 auf Basis des Empfangssignals E_{HF} pro Messzyklus n eine Auswertungskurve ZFₙ₋₁, ZFₙ. Dabei bildet die Auswertungskurve ZFₙ₋₁, ZFₙ die Amplitude A (bzw. bei komplexwertiger Aufzeichnung außerdem indirekt die Phase) des reflektierten Empfangssignals in Abhängigkeit der Messdistanz d bzw. der Signallaufzeit des Sendesignals S_{HF} /Empfangssignals E_{HF} wieder.

Bei Implementierung des FMCW-Verfahrens erstellt die Auswertungseinheit des Füllstandsmessgerätes 1 die Auswertungskurve ZFₙ₋₁, ZFₙ prinzipiell durch Mischen des momentan empfangenen Empfangssignals E_{HF} mit dem derzeit ausgesendeten Mikrowellensignal S_{HF}, wobei das Mikrowellensignal S_{HF} hierzu kontinuierlich mit sägezahnförmiger Frequenz-Änderung ausgesendet wird.

Im Fall des Pulslaufzeit-Verfahrens wird die Auswertungskurve ZFₙ₋₁, ZFₙ durch Unterabtastung des pulsförmigen Empfangssignals E_{HF} erstellt. Dabei weicht die Pulsfrequenz des Abtastsignals im Sub-Promillebereich von der Pulsfrequenz des Mikrowellensignals S_{HF} bzw. des Empfangssignals E_{HF} ab.

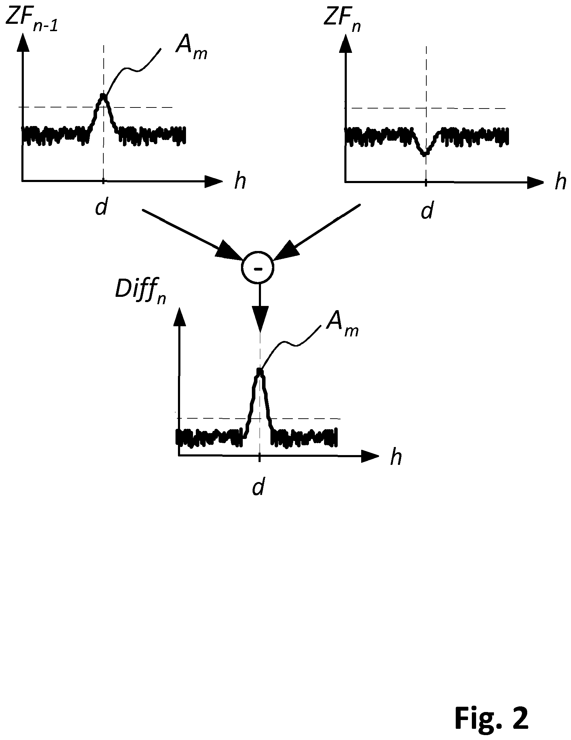

Sowohl bei FMCW, als auch beim Pulslaufzeit-Verfahren stellt die Auswertungskurve ZFₙ₋₁, ZFₙ die Signalamplitude des Empfangssignals E_{HF} in Abhängigkeit der Messdistanz d wieder. Im Falle der frei abstrahlenden, Radar-basierten Füllstandsmessung erstreckt sich der korrespondierende Messbereich h dementsprechend von der Antenne des Füllstandsmessgerätes 1 bis zum Boden des Behälters 2. Schematische Auswertungskurven ZFₙ₋₁, ZFₙ sind in Fig. 2 dargestellt.

Nach dem Stand der Technik bestimmt die Auswertungseinheit des Füllstandsmessgerätes 1 den Füllstand L aus der Auswertungskurve ZFₙ₋₁, ZFₙ. Hierzu wird der Ort d des Maximums Aₘ der Füllgut-Oberfläche ermittelt.

Aufgrund der höheren Bündelung des ausgesendeten Mikrowellensignals S_{HF} und der potentiell höheren Auflösung des gemessenen Füllstandes L werden insbesondere bei Implementierung des FMCW-Verfahrens möglichst hohe Radar-Frequenzen bei oberhalb von 60 GHz verwendet. Ein enger Strahlkegel kann jedoch gerade bei schwappenden Füllgütern 3 dazu führen, dass das Mikrowellensignal S_{HF} bei Reflektion an der Füllgut-Oberfläche abgelenkt wird, so dass das Empfangssignal E_{HF} nicht von der Antenne des Füllstandsmessgerätes 1 empfangen wird. In solchen Fällen weist die Auswertungskurve ZFₙ, wie in Fig. 2 dargestellt, im entsprechenden Messzyklus n-1 kein Maximum Aₘ auf.

Das erfindungsgemäße Verfahren, mit dem auch unter solchen Umständen der Füllstand L zuverlässig ermittelt werden kann, wird daher anhand von Fig. 2 näher veranschaulicht: Das Verfahren basiert darauf, durch Subtraktion der der Auswertungskurve ZFₙ des aktuellen Messzyklus n von einer gespeicherten Auswertungskurve ZFₙ₋ₘ eines vorhergehenden Messzyklus n-m (im einfachsten Fall dem direkt vorhergehenden Messzyklus n-1) eine erste Differenzkurve Diffₙ zu erstellen. Im Sinne der Erfindung ist es dabei nicht ausschlaggebend, welche Auswertungskurve ZFₙ₋ₘ₁, ZFₙ₋₁ von der jeweils anderen Kurve subtrahiert wird. Das Füllstandsmessgerät 1 bestimmt den Füllstand L erfindungsgemäß anhand dieser ersten Differenzkurve Diffₙ. Zur Suche des Maximums Aₘ (bzw. des Minimums, je nachdem wie die Differenzbildung durchgeführt wird) in der Differenzkurve Diffₙ kann jeglicher hierfür geeignete Algorithmus in der Auswertungseinheit implementiert sein.

Wie aus Fig. 2 hervorgeht, weist das Verfahren den Vorteil auf, dass in der ersten Differenzkurve Diffₙ das Maximum Aₘ der Füllgut-Oberfläche erscheint, selbst wenn die Auswertungskurve ZFₙ des aktuellen Messzyklus n, beispielsweise aufgrund von schwappendem Füllgut 3, kein Maximum Aₘ aufweist. Es wird also davon profitiert, dass in der Auswertungskurve ZFₙ₋₁ des vorangegangenen Messzyklus n-1 das Maximum Aₘ enthalten ist. Periphere Maxima in den Auswertungskurven ZFₙ, ZFₙ₋ₘ, die von statischen Einbauten im Behälter 3 verursacht sind (aus Gründen der Übersichtlichkeit nicht in Fig. 2 dargestellt), werden durch das erfindungsgemäße Verfahren hingegen ausgeblendet, so dass diese Maxima nicht zu einer fälschlichen Bestimmung des Füllsands L führen können.

Mit dem erfindungsgemäßen Verfahren kann der Füllstand L insbesondere dann sehr zuverlässig ermittelt werden, wenn das Füllstandsmessgerät 1 die Auswertungskurve ZFₙ und die Differenzkurve Diffₙ komplexwertig erstellt.

Aufgrund der Tatsache, dass in diesem Fall auch die Subtraktion komplexwertig erfolgt (das heißt, die Realteile bzw. die Imaginärteile der Auswertungskurven ZFₙ und ZFₙ₋ₘ werden separat voneinander subtrahiert), können etwaige Änderungen zwischen den Auswertungskurven ZFₙ und ZFₙ₋ₘ
noch hochauflösender erfasst werden. Bei dem in Fig. 2 gezeigten Ausführungsbeispiel zeigen die Graphen den Imaginärteil der Auswertungskurven ZFₙ, ZFₙ₋₁ und dementsprechend den Imaginärteil der Differenzkurve Diffₙ. Durch die komplexwertige Betrachtung der Auswertungskurven ZFₙ, ZFₙ₋₁ kann der Füllstand, wie in der aktuellen Auswertungskurve ZFₙ vorliegend, als Minimum erscheinen.

Neben einer hinreichenden Rechenleistung und Speicherkapazität des Füllstandsmessgerätes 1 ist es für eine komplexwertige Erfassung der Differenzkurve Diffₙ notwendig, dass die Signalerzeugungs-Einheit und die Auswertungseinheit kohärent getaktet sind.

Vor allem, sofern in den vergangenen Messzyklen n-m das Füllstands-Maximum Aₘ ununterbrochen an gleicher Stelle bzw. mit gleicher Amplitude in der Auswertungskurve ZFₙ, ZFₙ₋ₘ erscheint, kann es vorkommen, dass aus der Differenzkurve Diffₙ der Füllstand L nicht bestimmbar ist. Diesbezüglich ist es vorteilhaft, wenn das Füllstandsmessgerät 1 ausgelegt ist, zumindest in diesen Fällen den Füllstand L aus der aktuellen Auswertungskurve ZFₙ zu bestimmen.

Für eine zuverlässige Umsetzung des erfindungsgemäßen Verfahrens kann es vorteilhaft sein, neben der aktuellen Auswertungskurve ZFₙ nicht lediglich jeweils die Auswertungskurve ZFₙ₋₁ des direkt vorausgehenden Messzyklus n-1 heranzuziehen, um die Differenzkurve Diffₙ des aktuellen Messzyklus n zu bilden. Je nach Art der Störung an der Füllgut-Oberfläche, bzw. deren Auftritts-Häufigkeit, ist es vorteilhaft, zur Bildung der jeweils aktuellen Differenzkurve Diffₙ einen größeren Abstand m des aktuellen Messzyklus n zu demjenigen Messzyklus n-m, aus dem die abgespeicherte Auswertungskurve ZFₙ₋ₘ herangezogen wird, einzustellen.

Hierbei ist es vorteilhaft, diesen Abstand m unter Berücksichtigung der Messrate r, mit der das Füllstandsmessgerät 1 die Messzyklen n wiederholt, an die Häufigkeit bzw. Frequenz der Störung anzupassen. Dabei kann das Schwappen des Füllgutes 3 beispielsweise durch ein Rührwerk, dass mit einer definierten Frequenz betrieben wird, verursacht werden. Wenn also die Störung in einer ungefähren Frequenz von 1 Hz auftritt und die Messrate r, wie bei einer begrenzten Energie-Versorgung des Füllstandsmessgerätes 1 mittels eines 4-20 mA Signals üblich, lediglich 10 Hz beträgt, so ist der jeweilige Abstand auf m = 10 Messzyklen einzustellen. Sofern das Füllstandsmessgerät 1 die Messrate r während des Betriebs ändert, macht es dementsprechend zudem Sinn, den Abstand m zwischen den Messzyklen m, m-n antiproportional in Abhängigkeit der Messrate r anzupassen.

Im Rahmen der Erfindung kann das Füllstandsmessgerät 1 zu Redundanzzwecken so weiterentwickelt werden, dass es neben der ersten Differenzkurve Diffₙ zusätzlich eine zweite Differenzkurve Diff2ₙ aufnimmt. Dabei weicht der zugrunde liegende Abstand I des aktuellen Messzyklus n zu dem Messzyklus n-l, aus dem die abgespeicherte Auswertungskurve ZFₙ₋₁ zur Differenzkurvenbildung herangezogen wird, vom entsprechenden ersten Abstand m der ersten Differenzkurve Diffₙ ab. Die Abweichung der beiden Abstände I, m kann dabei beispielsweise mit einen festen Wert von 10 Messzyklen eingestellt sein. Die Redundanz kann bei dieser Weiterentwicklung vom Füllstandsmessgerät 1 beispielsweise geprüft werden, indem der Füllstand L aus beiden Differenzkurven Diffₙ, Diff2ₙ separat ermittelt wird. Die Redundanz ist dann gegeben, sofern der Füllstandswert L beider Messungen übereinstimmt.

### Bezugszeichenliste

- 1: Füllstandsmessgerät
- 2: Behälter
- 3: Füllgut
- 4: Übergeordnete Einheit
- Aₘ: Maximum
- d: Messdistanz
- Diffₙ: Erste Differenzkurve
- Diff2ₙ: Zweite Differenzkurve
- E_{HF}: Empfangssignale
- h: Einbauhöhe bzw. Messbereich
- L: Füllstand
- I: Zweiter Abstand
- n: Messzyklus
- m: Erster Abstand
- S_{HF}: Mikrowellensignale
- ZFₙ: Auswertungskurve

## Patentansprüche

1. Verfahren zur Radar-basierten Messung eines Füllstandes (L) eines in einem Behälter (2) befindlichen Füllgutes (3), wobei das Verfahren folgende Verfahrensschritte, die in aufeinanderfolgenden Messzyklen (n) wiederholt werden, umfasst:
- Aussenden eines Mikrowellensignals (S_{HF}) in Richtung des Füllgutes (3) über eine Antenne,
- Empfang eines Empfangssignals (E_{HF}) nach Reflektion des Mikrowellensignals (S_{HF}) im Inneren des Behälters (2),
- Erstellung einer komplexwertigen Auswertungskurve (ZFₙ) anhand von zumindest dem Empfangssignal (E_{HF}),
- Fortschreitendes Abspeichern der jeweils aktuellen Auswertungskurve (ZFₙ),
- Bildung einer ersten, komplexwertigen Differenzkurve (Diffₙ) anhand der Auswertungskurve (ZFₙ) des aktuellen Messzyklus (n) und einer gespeicherten Auswertungskurve (ZFₙ₋ₘ) eines vorhergehenden Messzyklus (n-m), und
- Bestimmung des Füllstandes (L) anhand eines Maximums (Aₘ) des Imaginärteils oder des Realteils der aktuellen, ersten Differenzkurve (Diffₙ),

2. Verfahren nach Anspruch 1, wobei die Messzyklen (n), in denen der Füllstand (L) jeweils neu bestimmt wird, mit einer definierten Messrate (r) wiederholt werden.

3. Verfahren nach Anspruch 2, wobei eine erste Anzahl (m) an Messzyklen zwischen dem aktuellen Messzyklus (n) und demjenigen vorhergehenden Messzyklus (n-l), aus dem die gespeicherte Auswertungskurve (ZFₙ₋ₘ) zur Bildung der ersten Differenzkurve (Diffₙ) herangezogen wird, in Abhängigkeit der Messrate (r) eingestellt ist.

4. Verfahren nach Anspruch 3, wobei die erste Anzahl (m) an Messzyklen antiproportional in Abhängigkeit der Messrate (r) eingestellt ist.

5. Verfahren nach einem der Ansprüche 1 bis 2, wobei die erste Differenzkurve (Diffₙ) anhand der aktuellen Auswertungskurve (ZFₙ) und der Auswertungskurve (ZFₙ₋₁), die im direkt vorangegangenen Messzyklus (n-1) erstellt wurde, gebildet wird.

6. Verfahren nach einem der vorhergehenden Ansprüche, wobei analog zur ersten Differenzkurve (Diffₙ) eine zweite Differenzkurve (Diff2ₙ) erstellt wird, und wobei abweichend von der ersten Anzahl (m) eine zweite Anzahl (I) an Messzyklen zwischen dem aktuellen Messzyklus (n) und demjenigen vorhergehenden Messzyklus (n-l), aus dem die gespeicherte Auswertungskurve (ZFₙ₋ₗ) zur Bildung der zweiten Differenzkurve (Diff2ₙ) herangezogen wird, gewählt ist.

7. Verfahren nach Anspruch 6, wobei der Füllstand (L) anhand der zweiten Differenzkurve (Diff2ₙ) bestimmt wird, sofern der Füllstand (L) anhand der ersten Differenzkurve (Diffₙ,) nicht bestimmbar ist.

8. Verfahren nach Anspruch 6, wobei der Füllstand (L) anhand derjenigen Differenzkurve (Diffₙ, Diff2ₙ) bestimmt wird, deren Maximum (A_{M}) eine höhere Amplitude aufweist.

9. Verfahren nach einem der vorhergehenden Ansprüche, wobei der Füllstand (L) anhand der aktuellen Auswertungskurve (ZFₙ) bestimmt wird, sofern der Füllstand (L) anhand der ersten Differenzkurve (Diffₙ) nicht bestimmbar ist.

10. Verfahren nach einem der Ansprüche 6 bis 9, wobei der Füllstand (L) anhand der aktuellen Auswertungskurve (ZFₙ) bestimmt wird, sofern der Füllstand (L) anhand der ersten Differenzkurve (Diffₙ) und anhand der zweiten Differenzkurve (Diff2ₙ) nicht bestimmbar ist.

11. Radar-basiertes Füllstandsmessgerät zur Durchführung des Verfahrens nach zumindest einem der vorhergehenden Ansprüche, folgende Komponenten umfassend:
- Eine Signalerzeugungs-Einheit, die ausgelegt ist, in aufeinanderfolgenden Messzyklen (n) jeweils ein Mikrowellensignal (S_{HF}) zu generieren,
- Eine Antenne, mittels der das Mikrowellensignal (S_{HF}) in Richtung des Füllgutes (3) aussendbar ist,
- eine Empfangseinheit, die konzipiert ist, um nach Reflektion des Mikrowellensignals (S_{HF}) im Inneren des Behälters (2) das entsprechende Empfangssignal (E_{HF}) über die Antenne zu empfangen,
- eine Auswertungseinheit, die ausgelegt ist, um
∘anhand von zumindest dem Empfangssignal (E_{HF}) pro Messzyklus (n) eine komplexwertige Auswertungskurve (ZFₙ) zu erstellen,
∘die jeweils aktuelle Auswertungskurve (ZF) fortschreitend abzuspeichern,
∘ durch Subtraktion der Auswertungskurve (ZFₙ) des aktuellen Messzyklus (n) und der Auswertungskurve (ZFₙ₋ₘ) eines vorhergehenden Messzyklus (n-m) eine erste, komplexwertige Differenzkurve (Diffₙ) zu bilden, und
∘ anhand eines Maximums (Aₘ) des Imaginärteils oder des Realteils der ersten Differenzkurve (Diffₙ) den Füllstand (L) zu bestimmen.

12. Füllstandsmessgerät nach Anspruch 11, wobei die Signalerzeugungs-Einheit, die Empfangseinheit und die Auswertungseinheit ausgelegt sind, den Füllstand (L) auf Basis des FMCW-Prinzips zu ermitteln.

13. Füllstandsmessgerät nach einem der Ansprüche 11 bis 12, wobei die Signalerzeugungs-Einheit ausgelegt ist, das Mikrowellensignal (S_{HF}) in einem Frequenzband von zumindest 60 GHz auszusenden, und wobei die Empfangseinheit sowie die Auswertungseinheit ausgelegt sind, das entsprechende Empfangssignal (E_{HF}) zu verarbeiten.

## Claims

1. A method for radar-based measurement of a fill level (L) of a filling material (3) in a container (2), wherein the method comprises the following method steps, which are repeated in successive measuring cycles (n):
- emitting a microwave signal (S_{HF}) in a direction of the filling material (3) via an antenna,
- receiving a receive signal (E_{HF}) after reflection of the microwave signal (S_{HF}) inside the container (2),
- creating an evaluation curve (ZFₙ) with complex values on the basis of at least the receive signal (E_{HF}),
- progressively storing each current evaluation curve (ZFₙ),
- forming a first difference curve (Diffₙ) with complex values on the basis of the evaluation curve (ZFₙ) of the current measuring cycle (n) and a stored evaluation curve (ZFₙ₋ₘ) of a preceding measuring cycle (n-m), and
- determining the fill level (L) on the basis of a maximum (Aₘ) of the imaginary part or the real part of the current, first difference curve (Diffₙ).

2. The method as claimed in claim 1, wherein the measuring cycles (n) in which the fill level (L) is in each case re-determined are repeated at a defined measuring rate (r).

3. The method as claimed in claim 2, wherein a first number (m) of measuring cycles is set, in dependence on the measuring rate (r), between the current measuring cycle (n) and the preceding measuring cycle (n-l), from which the stored evaluation curve (ZFₙ₋ₘ) is used for formation of the first difference curve (Diffₙ).

4. The method as claimed in claim 3, wherein the first number (m) of measuring cycles is set to be inversely proportional in dependence on the measuring rate (r).

5. The method as claimed in either one of claims 1 to 2, wherein the first difference curve (Diffₙ) is formed on the basis of the current evaluation curve (ZFₙ) and the evaluation curve (ZFₙ₋₁) created in the immediately preceding measuring cycle (n-1).

6. The method as claimed in any one of the preceding claims, wherein, analogously to the first difference curve (Diffₙ), a second difference curve (Diff2ₙ) is created, and wherein a second number (1), different from the first number (m), of measuring cycles is selected between the current measuring cycle (n) and the preceding measuring cycle (n-l), from which the stored evaluation curve (ZFₙ₋₁) is used for formation of the second difference curve (Diff2ₙ).

7. The method as claimed in claim 6, wherein the fill level (L) is determined on the basis of the second difference curve (Diff2ₙ) if the fill level (L) cannot be determined on the basis of the first difference curve (Diffₙ).

8. The method as claimed in claim 6, wherein the fill level (L) is determined on the basis of that difference curve (Diffₙ, Diff2ₙ) of which the maximum (A_{M}) has a greater amplitude.

9. The method as claimed in any one of the preceding claims, wherein the fill level (L) is determined on the basis of the current evaluation curve (ZFₙ) if the fill level (L) cannot be determined on the basis of the first difference curve (Diffₙ).

10. The method as claimed in any one of claims 6 to 9, wherein the fill level (L) is determined on the basis of the current evaluation curve (ZFₙ) if the fill level (L) cannot be determined on the basis of the first difference curve (Diffₙ) or on the basis of the second difference curve (Diff2ₙ).

11. A radar-based fill-level measurement device for carrying out the method as claimed in at least one of the preceding claims, comprising the following components:
- a signal-generation unit configured to generate a microwave signal (S_{HF}) in each case in successive measuring cycles (n),
- an antenna, by means of which the microwave signal (S_{HF}) can be emitted in the direction of the filling material (3),
- a receiving unit designed to receive the corresponding receive signal (E_{HF}) via the antenna after reflection of the microwave signal (S_{HF}) inside the container (2),
- an evaluation unit configured to
∘ create an evaluation curve (ZF) with complex values in each measuring cycle (n) on the basis of at least the receive signal (E_{HF}),
∘ progressively store each current evaluation curve (ZF),
∘ form a first difference curve (Diffₙ) with complex values by subtracting the evaluation curve (ZFₙ) of the current measuring cycle (n) and the evaluation curve (ZFₙ₋ₘ) of a preceding measuring cycle (n-m), and
∘ determine the fill level (L) on the basis of a maximum (Aₘ) of the imaginary part or the real part of the first difference curve (Diffₙ).

12. The fill-level measurement device as claimed in claim 11, wherein the signal-generation unit, the receiving unit and the evaluation unit are configured to determine the fill level (L) on the basis of the FMCW principle.

13. The fill-level measurement device as claimed in either one of claims 11 to 12, wherein the signal-generation unit is configured to emit the microwave signal (S_{HF}) in a frequency band of at least 60 GHz, and wherein the receiving unit and the evaluation unit are configured to process the corresponding receive signal (E_{HF}).

## Revendications

1. Procédé destiné à la mesure basée sur un radar d'un niveau (L) d'un produit (3) se trouvant dans un réservoir (2), le procédé comprenant les étapes de procédé suivantes, lesquelles étapes sont répétées dans des cycles de mesure (n) successifs :
- Émission d'un signal micro-ondes (S_{HF}) en direction du produit (3) par l'intermédiaire d'une antenne,
- Réception d'un signal de réception (E_{HF}) après réflexion du signal micro-ondes (S_{HF}) à l'intérieur du réservoir (2),
- Création d'une courbe d'évaluation (ZFₙ) à valeurs complexes à l'aide d'au moins le signal de réception (E_{HF}),
- Mémorisation progressive de la courbe d'évaluation (ZFₙ) actuelle,
- Formation d'une première courbe de différence (Diffₙ) à valeurs complexes à l'aide de la courbe d'évaluation (ZFₙ) du cycle de mesure (n) actuel et d'une courbe d'évaluation (ZFₙ₋ₘ) mémorisée d'un cycle de mesure (n-m) précédent, et
- Détermination du niveau (L) à l'aide d'un maximum (Aₘ) de la partie imaginaire ou de la partie réelle de la première courbe de différence (Diffₙ) actuelle.

2. Procédé selon la revendication 1, pour lequel les cycles de mesure (n), dans lesquels le niveau (L) est à chaque fois redéterminé, sont répétés avec une fréquence de mesure (r) définie.

3. Procédé selon la revendication 2, pour lequel un premier nombre (m) de cycles de mesure entre le cycle de mesure actuel (n) et le cycle de mesure précédent (n-1) - à partir duquel la courbe d'évaluation mémorisée (ZFₙ₋ₘ) est utilisée pour former la première courbe de différence (Diffₙ) - est réglé en fonction de la fréquence de mesure (r).

4. Procédé selon la revendication 3, pour lequel le premier nombre (m) de cycles de mesure est réglé de manière antiproportionnelle en fonction de la fréquence de mesure (r).

5. Procédé selon l'une des revendications 1 à 2, pour lequel la première courbe de différence (Diffₙ) est formée à l'aide de la courbe d'évaluation (ZFₙ) actuelle et de la courbe d'évaluation (ZFₙ₋₁), laquelle a été établie dans le cycle de mesure (n-1) directement précédent.

6. Procédé selon l'une des revendications précédentes,
pour lequel une deuxième courbe de différence (Diff2ₙ) est établie de manière analogue à la première courbe de différence (Diffₙ), et
pour lequel, à la différence du premier nombre (m), un deuxième nombre (I) de cycles de mesure est choisi entre le cycle de mesure (n) actuel et le cycle de mesure (n-1) précédent, à partir duquel la courbe d'évaluation mémorisée (ZFₙ₋₁) est utilisée pour former la deuxième courbe de différence (Diff2ₙ).

7. Procédé selon la revendication 6, pour lequel le niveau (L) est déterminé à l'aide de la deuxième courbe de différence (Diff2ₙ), dans la mesure où le niveau (L) ne peut pas être déterminé à l'aide de la première courbe de différence (Diffₙ).

8. Procédé selon la revendication 6, pour lequel le niveau (L) est déterminé à l'aide de la courbe différentielle (Diffₙ, Diff2ₙ) dont le maximum (A_{M}) présente une amplitude plus élevée.

9. Procédé selon l'une des revendications précédentes, pour lequel le niveau (L) est déterminé à l'aide de la courbe d'évaluation (ZFₙ) actuelle, dans la mesure où le niveau (L) ne peut pas être déterminé à l'aide de la première courbe de différence (Diffₙ).

10. Procédé selon l'une des revendications 6 à 9, pour lequel le niveau (L) est déterminé à l'aide de la courbe d'évaluation (ZFₙ) actuelle, dans la mesure où le niveau (L) ne peut pas être déterminé à l'aide de la première courbe de différence (Diffₙ) et à l'aide de la deuxième courbe de différence (Diff2ₙ).

11. Transmetteur de niveau basé sur un radar pour la mise en oeuvre du procédé selon au moins l'une des revendications précédentes, lequel transmetteur comprend les composants suivants :
- une unité de génération de signaux, laquelle est conçue pour générer un signal micro-ondes (S_{HF}) dans des cycles de mesure (n) successifs,
- une antenne au moyen de laquelle le signal micro-ondes (S_{HF}) peut être émis en direction du produit (3),
- une unité de réception, laquelle est conçue pour recevoir, après réflexion du signal micro-ondes (S_{HF}) à l'intérieur du réservoir (2), le signal de réception (E_{HF}) correspondant par l'intermédiaire de l'antenne,
- une unité d'évaluation, laquelle est conçue pour,
∘ créer, à l'aide d'au moins le signal de réception (E_{HF}), une courbe d'évaluation (ZFₙ) à valeurs complexes par cycle de mesure (n),
∘ mémoriser progressivement la courbe d'évaluation (ZF) actuelle,
∘ former une première courbe de différence (Diffₙ) à valeurs complexes par soustraction de la courbe d'évaluation (ZFₙ) du cycle de mesure (n) actuel et de la courbe d'évaluation (ZFₙ₋₃) d'un cycle de mesure (n-m) précédent, et
∘ déterminer le niveau (L) à l'aide d'un maximum (Aₘ) de la partie imaginaire ou de la partie réelle de la première courbe de différence (Diffₙ).

12. Transmetteur de niveau selon la revendication 11, pour lequel l'unité de génération de signaux, l'unité de réception et l'unité d'évaluation sont conçues pour déterminer le niveau (L) sur la base du principe FMCW.

13. Transmetteur de niveau selon l'une des revendications 11 à 12,
pour lequel l'unité de génération de signaux est conçue pour émettre le signal hyperfréquence (S_{HF}) dans une bande de fréquence d'au moins 60 GHz, et
pour lequel l'unité de réception ainsi que l'unité d'évaluation sont conçues pour recevoir le signal de réception (E_{HF}) correspondant.
